# EUROPÄISCHE PATENTSCHRIFT

(11) **EP 3 616 011 B1**
(45) Veröffentlichungstag und Bekanntmachung des Hinweises auf die Patenterteilung: **22.06.2022**
(21) Anmeldenummer: 18710856.8
(22) Anmeldetag: 12.03.2018
(51) Int. Cl.: H04L 41/0853, H04L 12/00, G05B 19/042, G05B 19/418, G05B 19/05, G05B 23/02

(54) **ANORDNUNG UND VERFAHREN ZUM ÜBERWACHEN EINER ANLAGE DER AUTOMATISIERUNGSTECHNIK**
ARRANGEMENT AND METHOD FOR MONITORING AN AUTOMATION TECHNOLOGY SYSTEM
DISPOSITIF ET PROCÉDÉ DE SURVEILLANCE D'UN SYSTÈME D'AUTOMATISATION

(30) Priorität: 27.04.2017 DE 102017109029
(43) Veröffentlichungstag der Anmeldung: 04.03.2020
(73) Patentinhaber: Endress+Hauser Process Solutions AG, 4153 Reinach (CH)
(72) Erfinder: BÜNZLI WURZER, Jürg, 4125 Riehen (CH); HÖFERLIN, Wolfgang, 79588 Efringen-Kirchen (DE); LUBER, Werner, 4123 Allschwil (CH); MAYER, Michael, 4104 Oberwil (CH)
(74) Vertreter: Andres, Angelika Maria
(86) Internationale Anmeldenummer: PCT/EP2018/056018
(87) Internationale Veröffentlichungsnummer: WO 2018/197093

(56) Entgegenhaltungen:
- EP-A1- 2 662 738
- WO-A1-2018/199116
- DE-A1-102009 046 041
- DE-A1-102010 063 164
- DE-A1-102015 108 053
- US-A1- 2012 004 743

## Beschreibung

Die Erfindung betrifft eine Anordnung, eine Feldbuszugriffseinheit und ein Verfahren zum Überwachen einer Anlage der Automatisierungstechnik, welche Anlage eine Feldbuszugriffseinheit, insbesondere eine Recheneinheit, ein Gateway oder ein Edge Device, welches mit einem zumindest einem ersten drahtgebunden oder drahtlos ausgestalteten Kommunikationsnetzwerks in Kommunikationsverbindung steht, aufweist, wobei das erste Kommunikationsnetzwerk eine Mehrzahl von Feldgeräten und Netzwerkknoten aufweist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Die Integration von Feldgeräten in solche Bedienprogramme erfolgt über Gerätetreiber, beziehungsweise über Gerätebeschreibungen. Diese werden von den Geräteherstellern bereitgestellt, damit die übergeordneten Einheiten, beziehungsweise die auf diesen übergeordneten Einheiten ablaufenden Bedienprogramme, die Bedeutung der von den Feldgeräten gelieferten Informationen erkennen und interpretieren können. Ein solches Bedienprogramm, in welches die Gerätebeschreibungen, bzw. Gerätetreiber geladen werden, wird auch als Rahmenapplikation bezeichnet.

Für eine vollumfängliche Bedienung der Feldgeräte sind spezielle Gerätetreiber, so genannte DTMs (Device Type Manager), die den FDT (Field Device Tool) Spezifikationen entsprechen, erhältlich. Viele Feldgerätehersteller liefern für ihre Feldgeräte entsprechende DTMs aus. Die DTMs kapseln alle Variablen und Funktionen des jeweiligen Feldgeräts und bieten meist eine graphische Nutzeroberfläche zum Bedienen der Geräte innerhalb der Rahmenapplikation an.

Neben den übergeordneten Einheiten werden zur Bedienung der Feldgeräte häufig Bedieneinheiten in Form von Client-Rechnern eingesetzt, auf welchen eine entsprechende Rahmenapplikation abläuft. Diese Client-Rechner sind beispielsweise Laptops, aber auch mobile Endgeräte wie beispielsweise Tablet-PCs. Sie werden zur Kommunikation mit den Feldgeräten mit einer mit dem Feldbusnetzwerk verbundenen Feldbuszugriffseinheit verbunden. Auf der Feldbuszugriffseinheit wird ebenfalls eine Rahmenapplikation ausgeführt. Mithilfe eines speziellen Kommunikationstreibers, beispielsweise dem von der Anmelderin für die Rahmenapplikation "Fieldcare" angebotenen "YCommDTMs", ist es möglich, auf die Rahmenapplikation der Feldbuszugriffseinheit zuzugreifen und über diese Zugriff auf die Feldgeräte zu erlangen. Für den Client-Rechner ist die zwischen Feldgerät und Feldbuszugriffseinheit liegende Netzwerkinfrastruktur komplett transparent, da diese lediglich der Feldbuszugriffseinheit bekannt sein muss. Der Client-Rechner muss lediglich die Netzwerkadresse des Feldgerätes, auf welches er zugreifen möchte, kennen.

Die Netzwerkinfrastruktur, also die jeweiligen (Teil-)Netzwerke, die in dem jeweiligen Netzwerk vorhandenen Feldgeräte und Netzwerkknoten (beispielsweise Segmentkoppler, Remote IOs, etc.), wird für gewöhnlich in der Rahmenapplikation auf zwei verschiedene Arten visualisiert: Zum einen mittels einer Netzwerktopologie welche Netzwerktopologie eine Sortierung und Strukturierung der Netzwerkknoten und Feldgeräte entsprechend deren Netzwerkadressen vorsieht. Zum anderen mittels einer Anlagentopologie, wobei die Anlagentopologie eine Sortierung und Strukturierung der Netzwerkknoten und Feldgeräte entsprechend der jeweiligen Anlagenteile, in welchem die Netzwerkknoten und Feldgeräte eingesetzt sind, vorsieht.

Bisher mussten die Informationen zur Netzwerkinfrastruktur manuell von der Feldbuszugriffseinheit auf den Client-Rechner übertragen werden. Hierfür wurden Projektdateien in einem Generator in die besagten Informationen umgewandelt und anschließend zu dem Client-Rechner übermittelt, was ein aufwendiges Verfahren darstellt. Da die Informationen ausschließlich manuell synchronisiert wurden, konnten die auf dem Client-Rechner befindlichen Informationen zur Netzwerkinfrastruktur von der tatsächlich in der Anlage befindlichen Netzwerkinfrastruktur abweichen und schnell veraltet sein, beispielsweise wenn Feldgeräte getauscht oder aktualisiert wurden.

Die DE102010063164 A1 betrifft ein Verfahren zum Integrieren von einem in einem Netzwerk der Automatisierungstechnik unbekannten Feldgerät in ein bestehendes Netzwerk.

US 2012/004743 A1 zeigt ein Verfahren für eine optimierte Wartung von Feldgeräte in einem Netzwerk.

DE 10 2015 108053 A1 zeigt das Scannen eines Adressraums um Gerätespezifikationen von den im Adressraum vorhandenen Feldgeräten abzufragen.

Ausgehend von dieser Problematik liegt der Erfindung die Aufgabe zugrunde, ein Verfahren, eine Feldbuszugriffseinheit und eine Anordnung vorzustellen, welche auf einfache Art und Weise einen aktuellen Überblick auf die Netzwerkinfrastruktur in einer Anlage der Prozessautomatisierung erlauben.

Die Aufgabe wird durch ein Verfahren zum Überwachen einer Anlage der Automatisierungstechnik gemäß Patentanspruch 1 und eine Anordnung gemäß Patentanspruch 12 gelöst.

Der Vorteil des erfindungsgemäßen Verfahrens besteht darin, dass einem Bediener stets die zum Zeitpunkt der Anfrage aktuellen Daten zur Netzwerkinfrastruktur des ersten Kommunikationsnetzwerks übermittelt werden. Dieser erhält dadurch eine "Live"-Sicht auf die Anlage, bzw. auf das erste Kommunikationsnetzwerk der Anlage. Die Strukturdaten werden im Gegensatz zu den im Stand der Technik bekannten Verfahren automatisch erstellt.

Bei der ersten Rahmenapplikation handelt es sich insbesondere um eine FDT/FDI-Rahmenapplikation oder um einen DD(Device Description)- oder EDD(Electronic Device Description)-Host.

Bei dem ersten Kommunikationsnetzwerk handelt es sich in dem Falle, dass dieses drahtgebunden ausgestaltet ist, beispielsweise um einen Feldbus der Automatisierungstechnik, beispielsweise Foundation Fieldbus, Profibus PA, Profibus DP, HART, CANBus, etc. Es kann sich aber auch um ein modernes industrielles Kommunikationsnetzwerk, beispielsweise um einen "Industrial Ethernet"-Feldbus, insbesondere Profinet, HART-IP oder Ethernet/IP oder um ein aus dem Kommunikationsbereich bekanntes Kommunikationsnetzwerk, beispielsweise Ethernet nach dem TCP/IP-Protokoll, handeln.

In dem Falle, dass das erste Kommunikationsnetzwerk drahtlos ausgestaltet ist, handelt es sich bei diesem insbesondere um WirelessHART, Bluetooth, Wifi, ZigBee, etc.

Typischerweise besteht das erste Kommunikationsnetzwerk aus mehreren Teilnetzwerken, sogenannten Netzwerkebenen, welche mittels Netzwerkknoten miteinander verbunden sind. Die Teilnetzwerke können hierbei unterschiedliche Netzwerktypen und Netzwerkprotokolle besitzen.

Bei einem Netzwerkknoten handelt es sich um ein Netzwerkgerät, welches die einzelnen Netzwerkebenen miteinander verbindet. Gegebenenfalls führen die Netzwerkknoten eine Protokollübersetzung zwischen den jeweils verbundenen Netzwerkebenen durch. Je nach Typ der verbundenen Netzwerkebenen handelt es sich bei den Netzwerkknoten beispielsweise um Gateways, Remote IOs, Links, Koppler, Protokollumsetzer, Multiplexer etc.

Bei einem Remote-IO handelt es sich z.B. um einen lokalen Verteilerknoten, an den ein oder mehrere Feldgeräte oder Netzwerkknoten angeschlossen werden können. Der Remote-IO dient in erster Linie zur Verringerung des Verkabelungsaufwands. Anstatt jede Komponente einzeln mit einem entfernten Feldbusnetzwerk zu verkabeln, wird ein Remote-IO als Verteilerknoten an das Kommunikationsnetzwerk angeschlossen, und über den Remote-IO wird der Datenverkehr an verschiedene in der Nachbarschaft befindliche Feldgeräte weitergeleitet. Bei einem Remote-IO steht der Aspekt der lokalen Verteilung des Datenverkehrs im Vordergrund.

Bei einem Gateway geht es in erster Linie um die Kopplung zwischen unterschiedlichen Netzwerkebenen. Dabei sorgt der Gateway für eine geeignete Umsetzung des Datenverkehrs zwischen den einzelnen Netzwerkebenen. Diese Umsetzung kann eine Protokollumsetzung beinhalten, dies ist jedoch nicht zwingend.

Bei einem Protokollumsetzer steht dagegen die Protokollumsetzung im Vordergrund. Der ankommende Datenverkehr wird aus einem ersten Feldbusprotokoll in ein zweites Feldbusprotokoll bzw. in umgekehrter Richtung aus dem zweiten Protokoll in das erste Protokoll umgesetzt.

Bei einem Multiplexer steht die Erweiterung des verfügbaren Adressbereichs im Vordergrund. Der Multiplexer stellt einen Adressbereich zur Verfügung, über den eine Vielzahl von an den Multiplexer angeschlossenen Geräten adressiert werden kann. Entsprechend der Adressierung wird der ankommende Datenverkehr dann zum jeweiligen Zielgerät geroutet.

Bei dem zweiten Kommunikationsnetzwerk handelt es sich beispielsweise um eine Internet-/Intranetverbindung zwischen Client-Rechner und Feldbuszugriffseinheit, welche drahtlos oder drahtgebunden realisiert sein kann.

Feldgeräte, welche im Zusammenhang mit dem erfindungsgemäßen Verfahren genannt werden, sind bereits im einleitenden Teil der Beschreibung beispielhaft beschrieben worden.

Eine vorteilhafte Ausgestaltung des erfindungsgemäßen Verfahrens sieht vor, dass die Feldbuszugriffseinheit beim Starten der ersten Rahmenapplikation automatisch die Strukturdaten derjenigen Netzwerkebene des ersten Kommunikationsnetzwerks erstellt und übermittelt, welche unmittelbar mit der Feldbuszugriffseinheit verbunden ist.

Gemäß einer bevorzugten Ausgestaltung des erfindungsgemäßen Verfahrens ist vorgesehen, dass die Feldbuszugriffseinheit zusätzlich zu den Strukturdaten der Netzwerkebene die Strukturdaten des gesamten ersten Kommunikationsnetzwerks erstellt und an den Client-Rechner übermittelt. Für einen Bediener ist somit die gesamte aktuelle Netzwerkinfrastruktur des ersten Kommunikationsnetzwerks ersichtlich. Insbesondere in modernen industriellen Kommunikationsnetzwerken auf Ethernet-Basis ist typischerweise ausreichend Bandbreite vorhanden, um einen kompletten Scan des Kommunikationsnetzwerk ohne Beeinträchtigung des herkömmlichen Datenverkehrs vornehmen zu können.

Gemäß einer vorteilhaften Weiterbildung des erfindungsgemäßen Verfahrens ist vorgesehen, dass die Feldbuszugriffseinheit den Strukturdaten vor dem Übermitteln Netzwerkadressen und Identifikationsdaten der jeweils bestimmten Netzwerkknoten und Feldgeräte hinzufügt.

In einer vorteilhaften Weiterbildung des erfindungsgemäßen Verfahrens ist vorgesehen, dass einer/eines der bestimmten Netzwerkknoten und Feldgeräte mittels der ersten Rahmenapplikation bedient wird, indem mit Hilfe dessen Identifikationsdaten und dessen Netzwerkadresse ein Kommunikationskanal zwischen dem Client-Rechner und dem Feldgeräts, bzw. dem Netzwerkknoten, über die Feldbuszugriffseinheit etabliert wird. Der Bediener erhält somit nicht nur die Informationen über die Netzwerkinfrastruktur, sondern die aktuellen Netzwerkparameter der in dem ersten Kommunikationsnetzwerk befindlichen Feldgeräte und Netzwerkknoten übermittelt. Ein funktionierender Zugriff auf diese Netzwerkkomponenten ist somit jederzeit gewährleistet. Der Zugriff auf das jeweilige Feldgerät, bzw. auf den Netzwerkknoten, erfolgt mittels eines speziellen Kommunikationstreibers, welcher auf der ersten Rahmenapplikation des Client-Rechners ausgeführt wird und welcher auf die in der Feldbuszugriffseinheit ausgeführte erste Rahmenapplikation zugreift. Gemäß einer vorteilhaften Ausgestaltung des erfindungsgemäßen Verfahrens ist vorgesehen, dass zur Bedienung des Feldgeräts, bzw. des Netzwerkknotens, ein zum Feldgerät, bzw. zum Netzwerkknoten, korrespondierender Gerätetreiber in der ersten Rahmenapplikation geladen wird. Der jeweils passende Gerätetreiber wird insbesondere anhand der übermittelten Identifikationsdaten automatisch ausgewählt. Insbesondere ist vorgesehen, dass sich eine Vielzahl von Gerätetreibern auf dem Client-Rechner befindet, aus welcher der passende Gerätetreiber ausgewählt wird. Es kann für den Fall, dass auf dem Client-Rechner kein passender Gerätetreiber vorhanden ist, vorgesehen sein, dass der Client-Rechner via Internet auf einen Server des Feldgeräteherstellers zugreift und von diesem den passenden Gerätetreiber herunterlädt.

Eine vorteilhafte Ausgestaltung des erfindungsgemäßen Verfahrens sieht vor, dass die bestimmten Netzwerkknoten und Feldgeräte gemäß den übermittelten Strukturdaten in der ersten Rahmenapplikation visualisiert werden.

Gemäß einer ersten Variante des erfindungsgemäßen Verfahrens ist vorgesehen, dass die bestimmten Netzwerkknoten und Feldgeräte in einer Netzwerktopologie visualisiert werden, welche Netzwerktopologie eine Sortierung und Strukturierung der Netzwerkknoten und Feldgeräte entsprechend deren Netzwerkadressen vorsieht.

Gemäß einer zweiten Variante des erfindungsgemäßen Verfahrens ist vorgesehen, dass die bestimmten Netzwerkknoten und Feldgeräte in einer Anlagentopologie visualisiert werden, wobei die Anlagentopologie eine Sortierung und Strukturierung der Netzwerkknoten und Feldgeräte entsprechend der jeweiligen Anlagenteile, in welchem die Netzwerkknoten und Feldgeräte eingesetzt sind, vorsieht.

Gemäß einer vorteilhaften Ausgestaltung des erfindungsgemäßen Verfahrens ist vorgesehen, dass durch Auswählen eines Netzwerkknotens in der Visualisierung die Strukturdaten von in mit dem Netzwerkknoten verbundenen weiteren Netzwerkebenen des ersten Kommunikationsnetzwerks neu erstellt, übermittelt und visualisiert werden. Auf diese Art und Weise wird dem Bediener stets die aktuelle Visualisierung der mit dem Netzwerkknoten verbundenen Netzwerkebenen, bzw. den in den Netzwerkebenen befindlichen Feldgeräte und/oder Netzwerkknoten, angezeigt.

Gemäß einer vorteilhaften Ausgestaltung des erfindungsgemäßen Verfahrens ist vorgesehen, dass die Bedienung des Feldgeräts/des Netzwerkknotens durch dessen Auswahl in der Visualisierung in der ersten Rahmenapplikation initiiert wird. Dem Bediener wird hierdurch Arbeit abgenommen, da dieser nicht separat eine Verbindung zu dem Feldgerät, bzw. zu dem Netzwerkknoten aufbauen muss.

Verfahren nach Anspruch zumindest einem der vorherigen Ansprüche, wobei die Strukturdaten in einem strukturierten Textformat, in einem XML-Datenformat, in einem SQL-Datenformat oder in einem JavaScript Object Notation-Datenformat an den Client-Rechner übermittelt werden.

Weiterhin wird die Aufgabe durch eine Feldbuszugriffseinheit zur Verwendung in dem erfindungsgemäßen Verfahren gelöst.

Des Weiteren wird die Aufgabe durch eine Anordnung gelöst, umfassend einen Client-Rechner, auf welchem eine ersten Rahmenapplikation und einen auf der ersten Rahmenapplikation ablaufenden Kommunikationstreiber implementiert ist, und eine Feldbuszugriffseinheit, auf welcher eine zweite Rahmenapplikation implementiert ist, zur Durchführung des erfindungsgemäßen Verfahrens.

Die Erfindung wird anhand der nachfolgenden Figur näher erläutert. Es zeigt

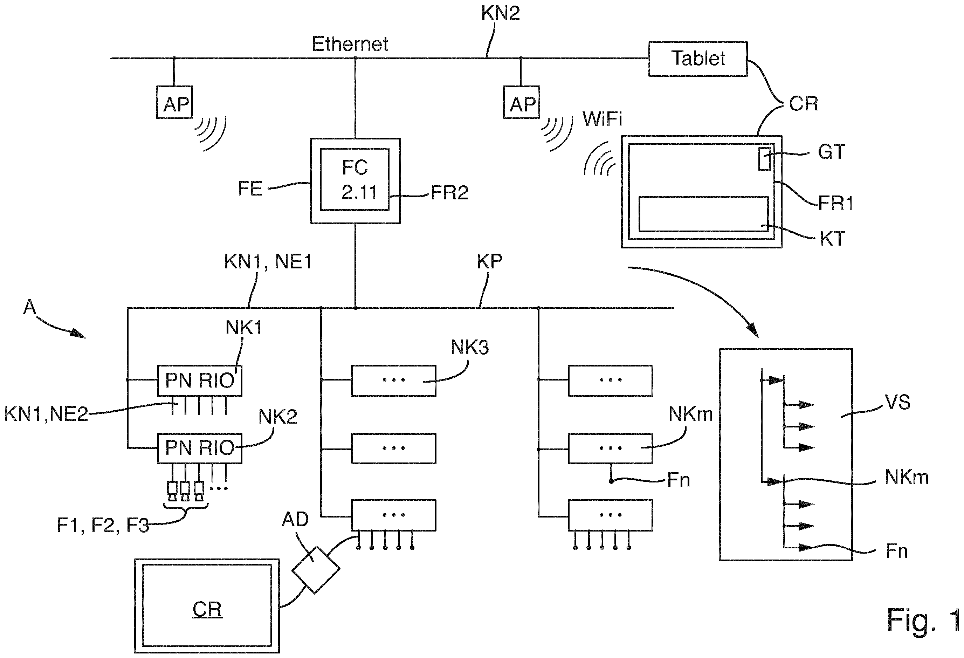

Fig. 1: ein Ausführungsbeispiel des erfindungsgemäßen Verfahrens.

Fig. 1 zeigt ein Ausführungsbeispiel des erfindungsgemäßen Verfahrens. Gezeigt ist ein Teil einer Anlage A der Prozessautomatisierung. An einem ersten Kommunikationsnetzwerk KN1 ist eine Vielzahl von Feldgeräten F1, F2, F3, ..., Fn angeschlossen. Das erste Kommunikationsnetzwerk KN1 besteht hierbei aus mehreren Netzwerkebenen NE1, NE2. In einer ersten Netzwerkebene NE1 sind mehrere Netzwerkknoten NK1, NK2, NK3, ..., NKm in Gestalt von Remote-IOs mittels eines Profinet-Feldbusses miteinander verbunden. An jedem der Netzwerkknoten NK1, NK2, NK3, ..., NKm ist eine Vielzahl von Feldgeräten F1, F2, F3 mittels HART-Kommunikationsschleifen, welche jeweils eine zweite Netzwerkebene NE2 bilden, verbunden.

An die erste Netzwerkebene NE1 ist eine Feldbuszugriffseinheit FE angeschlossen. Bei dieser handelt es sich beispielsweise um einen Rechner. Auf der Feldbuszugriffseinheit FE ist eine zweite Rahmenapplikation ausgeführt, mittels welcher die einzelnen Feldgeräte F1, F2, F3, ..., Fn bedient und/oder überwacht werden können. Mittels einer zusätzlichen Schnittstelle ist die Feldbuszugriffseinheit an ein Ethernet-Netzwerk angeschlossen. Dieses bildet beispielsweise das Netzwerk der Leitebene der Anlage A. An dem Ethernet-Netzwerk sind ein oder mehrere Access Points angeschlossen. Diese gewähren einen Zugriff auf das Ethernet-Netzwerk mittels einer Drahtlosverbindung, beispielsweise WiFi.

Zur Bedienung der Feldgeräte F1, F2, F3, ..., Fn kann zusätzlich eine Bedieneinheit in Form eines Client-Rechners CR verwendet werden. Hierfür kann der Client-Rechner CR direkt an eine HART-Kommunikationsschleife eines Feldgeräts F1, F2, F3, ..., Fn angeschlossen werden. Hierfür wird ein spezieller Adapter AD, welcher ein HART-Modem darstellt, benötigt. Auf diese Art und Weise kann aber nur jeweils eines der Feldgeräte F1, F2, F3, ..., Fn zu einem Zeitpunkt bedient werden.

Alternativ kann daher der Client-PC mittels eines zweiten Kommunikationsnetzwerks KN2 mit der Feldbuszugriffseinheit FE verbunden werden. Das zweite Kommunikationsnetzwerk besteht in diesem Fall aus einer WiFi-Funkverbindung zwischen dem Client-Rechner CR und der Feldbuszugriffseinheit FE.

Ist dem Client-Rechner die Netzwerkadresse eines Feldgeräts F1, F2, F3, ..., Fn bekannt, so kann dieser über die Feldbuszugriffseinheit FE auf das Feldgerät F1, F2, F3, ..., Fn zugreifen. Hierfür ist auf dem Client-Rechner eine erste Rahmenapplikation FR1 ausgeführt. Mithilfe eines speziellen Kommunikationstreibers KT, beispielsweise dem von der Anmelderin für die Rahmenapplikation "Fieldcare" angebotenen "YCommDTMs", welcher in der ersten Rahmenapplikation FR1 ausgeführt wird, ist es möglich, auf die zweite Rahmenapplikation FR2 der Feldbuszugriffseinheit FE zuzugreifen und über diese einen Kommunikationskanal KK zwischen Client-Rechner CR und Feldgerät F1, F2, F3, ..., Fn zu etablieren und Zugriff auf das Feldgerät F1, F2, F3, ..., Fn zu erlangen. Auf diese Art und Weise ist es auch möglich, mehrere Feldgeräte F1, F2, F3, ..., Fn gleichzeitig zu bedienen und/oder zu überwachen.

Wie bereits im einleitenden Teil der Beschreibung dargelegt, besteht Bedarf daran, eine aktuelle Übersicht über die Netzwerkinfrastruktur des ersten Kommunikationsnetzwerk KN1 der Anlage A zu erhalten. Hierfür übermittelt der Client-Rechner CR eine Anfrage an die Feldbuszugriffseinheit FE. Diese ermittelt daraufhin für zumindest eine Netzwerkebene NE1, NE2 alle in dieser Netzwerkebene NE1, NE2 befindlichen Komponenten, also die in der Netzwerkebene NE1, NE2 befindlichen Feldgeräte F1, F2, F3, ..., Fn und Netzwerkknoten NK1, NK2, NK3, ..., NKm. Hierfür scannt die Feldbuszugriffseinheit FE den Adressraum der Netzwerkebene NE1, NE2. Anhand der ermittelten Feldgeräte F1, F2, F3, ..., Fn und Netzwerkknoten NK1, NK2, NK3, ..., NKm erstellt die Feldbuszugriffseinheit FE Strukturdaten. Diese Strukturdaten enthalten die ermittelten Feldgeräte F1, F2, F3, ..., Fn und Netzwerkknoten NK1, NK2, NK3, ..., NKm, sowie die Netzwerkebene NE1, NE2, in welcher sich diese befinden. Alternativ kann auch das ganze erste Kommunikationsnetzwerk KN1 gescannt werden, dies ist aber mit einem erhöhten Zeitaufwand und Datenverkehr auf dem ersten Kommunikationsnetzwerk KN1 verbunden.

Bevor die Strukturdaten an den Client-Rechner CR übermittelt werden, werden diesen die Netzwerkadressen und Identifikationsdaten, beispielsweise der jeweilige Tag und/oder die jeweilige Seriennummer, der jeweils bestimmten Netzwerkknoten NK1, NK2, NK3, ..., NKm und Feldgeräte F1, F2, F3, ..., FN hinzufügt.

Anschließend werden die Strukturdaten in ein geeignetes Format, vorteilhafter Weise in ein strukturiertes Textformat, in ein XML-Datenformat, in ein SQL-Datenformat oder in ein JavaScript Object Notation-Datenformat konvertiert und an den Client-Rechner CR übermittelt. Auf diesem werden die Strukturdaten verarbeitet und als Visualisierung VS in der ersten Rahmenapplikation FR1 angezeigt. In dem in Fig. 1 abgebildeten Beispiel ist die Visualisierung VS eine sogenannte Netzwerktopologie. In einer Netzwerktopologie wird eine Sortierung und Strukturierung der Netzwerkknoten NK1, NK2, NK3, ..., NKm und Feldgeräte F1, F2, F3, ..., Fn entsprechend deren Netzwerkadressen vorgenommen.

Alternativ kann die Visualisierung als Anlagentopologie erfolgen. In einer Anlagentopologie wird eine Sortierung und Strukturierung der Netzwerkknoten NK1, NK2, NK3, ..., NKm und Feldgeräte F1, F2, F3, ..., Fn entsprechend der jeweiligen Teile der Anlage A, in welchen die Netzwerkknoten NK1, NK2, NK3, ..., NKm und Feldgeräte F1, F2, F3, ..., Fn eingesetzt sind, vorgenommen.

Durch Auswahl eines Feldgeräts F1, F2, F3, ..., Fn oder eines Netzwerkknotens NK1, NK2, NK3, ..., NKm in der Visualisierung VS, beispielsweise mittels Mausklick oder Tippen (bei Verwendung eines Touchscreens) wird, wie obig beschrieben, ein Kommunikationskanal KK zwischen dem Feldgerät F1, F2, F3, ..., Fn, bzw. dem Netzwerkknoten F1, F2, F3, ..., Fn und dem Client-Rechner CR über die Feldbuszugriffseinheit FE aufgebaut (in dem in Fig. 1 gezeigten Beispiel zwischen Cleint-Rechner RC und Feldgerät FN). Hierbei werden die den Strukturdaten hinzugefügten Identifikationsdaten und Netzwerkadressen verwendet. Zur Bedienung eines Feldgeräts F1, F2, F3, ..., Fn oder eines Netzwerkknotens NK1, NK2, NK3, ..., NKm wird automatisch der passende Gerätetreiber GT in die erste Rahmenapplikation FR1 geladen und ausgeführt.

Es ist außerdem möglich, die Visualisierung VS zu aktualisieren. Hierfür kann es vorgesehen sein, einen oder mehrere der Knotenpunkte NK1, NK2, NK3, ..., NKm auszuwählen. Daraufhin wird automatisch eine Anfrage an die Feldbuszugriffseinheit FE versendet und die Strukturdaten der jeweils unterliegenden Netzwerkebene NE1, NE2 des Netzwerkknotens NK1, NK2, NK3, ..., NKm erhoben und an den Client-Rechner CR übermittelt. Die bereits vorhandenen Strukturdaten werden dann mit den neu erhobenen Strukturdaten aktualisiert.

Das erfindungsgemäße Verfahren bietet den großen Vorteil, dass ein Bediener stets eine aktuelle Sicht auf die Netzwerkinfrastruktur seiner Anlage A erhält. Die Strukturdaten werden mittels des erfindungsgemäßen Verfahrens, im Gegensatz zu den im Stand der Technik bekannten Verfahren, auf effiziente Art und Weise automatisch erstellt.

### Bezugszeichenliste

- A: Anlage der Automatisierungstechnik
- AD: Adapter
- CR: Client-Rechner
- F1, F2, F3, ..., FN: Feldgeräte
- FE: Feldbuszugriffseinheit
- FR1: ersten Rahmenapplikation
- FR2: zweite Rahmenapplikation
- GT: Gerätetreiber
- KK: Kommunikationskanal
- KN1: erstes Kommunikationsnetzwerk
- KN2: zweites Kommunikationsnetzwerk
- KT: Kommunikationstreiber
- NE1, NE2: Netzwerkebenen
- NK1, NK2, NK3, ..., NKm: Netzwerkknoten
- VS: Visualisierung

## Patentansprüche

1. Verfahren zum Überwachen einer Anlage (A) der Automatisierungstechnik, welche eine Feldbuszugriffseinheit (FE), insbesondere eine Recheneinheit, ein Gateway oder ein Edge Device, aufweist, welche Feldbuszugriffseinheit (FE) mit zumindest einem ersten drahtgebunden oder drahtlos ausgestalteten Kommunikationsnetzwerks (KN1) in Kommunikationsverbindung steht, wobei das erste Kommunikationsnetzwerk (KN1) eine Mehrzahl von Feldgeräten (F1, F2, F3, ..., FN) und Netzwerkknoten (NK1, NK2, NK3, ..., NKm) aufweist,
wobei ein Kommunikationstreiber (KT), welcher in einer ersten Rahmenapplikation (FR1) abläuft, welche erste Rahmenapplikation (FR1) auf einem mit der Feldbuszugriffseinheit (FE) über zumindest ein zweites Kommunikationsnetzwerk (KN2) direkt oder indirekt verbundenen Client-Rechner (CR) implementiert ist, Strukturdaten von in zumindest einer Netzwerkebene (NE1, NE2) des ersten Kommunikationsnetzwerks (KN1) vorhandenen Netzwerkknoten (NK1, NK2, NK3, ..., NKm) und Feldgeräten (F1, F2, F3, ..., FN) abfragt,
wobei die Abfrage der Strukturdaten an die Feldbuszugriffseinheit (FE) übermittelt wird und diese die besagten Strukturdaten erstellt und an den Client-Rechner (CR) übermittelt; und
wobei die Strukturdaten im Rahmen der Anfrage von der Feldbuszugriffseinheit (FE) erstellt werden, indem die Feldbuszugriffseinheit (FE) den Adressraum der Netzwerkebene (NE1, NE2) scannt und die in dem Adressraum vorhandenen Netzwerkknoten (NK1, NK2, NK3, ..., NKm) und Feldgeräte (F1, F2, F3, ..., FN) bestimmt, wobei die Strukturdaten die Infrastruktur des ersten Kommunikationsnetzwerks betreffen und Netzwerkadressen und Identifikationsdaten der jeweils ermittelten Feldgeräte (F1, F2, F3, ..., Fn) und Netzwerkknoten (NK1, NK2, NK3, ..., NKm), sowie die Netzwerkebene (NE1, NE2), in welcher sich die ermittelten Feldgeräte (F1, F2, F3, ..., Fn) und Netzwerkknoten (NK1, NK2, NK3, ..., NKm) befinden, enthalten.

2. Verfahren nach Anspruch 1, wobei die Feldbuszugriffseinheit (FE) beim Starten der ersten Rahmenapplikation (FR1) automatisch die Strukturdaten derjenigen Netzwerkebene (NE1) des ersten Kommunikationsnetzwerks (KN1) erstellt und übermittelt, welche unmittelbar mit der Feldbuszugriffseinheit (FE) verbunden ist.

3. Verfahren nach zumindest einem der Ansprüche 1 oder 2, wobei die Feldbuszugriffseinheit (FE) zusätzlich zu den Strukturdaten der Netzwerkebene (NE1, NE2) die Strukturdaten des gesamten ersten Kommunikationsnetzwerks (KN1) erstellt und an den Client-Rechner (CR) übermittelt.

4. Verfahren nach Anspruch 1, wobei einer/eines der bestimmten Netzwerkknoten (NK1, NK2, NK3, ..., NKm) und Feldgeräte (F1, F2, F3, ..., FN) mittels der ersten Rahmenapplikation (FR1) bedient wird, indem mit Hilfe dessen Identifikationsdaten und dessen Netzwerkadresse ein Kommunikationskanal (KK) zwischen dem Client-Rechner (CR) und dem Feldgeräts (F1, F2, F3, ..., FN), bzw. dem Netzwerkknoten (NK1, NK2, NK3, ..., NKm), über die Feldbuszugriffseinheit (FE) etabliert wird.

5. Verfahren nach Anspruch 4, wobei zur Bedienung des Feldgeräts (F1, F2, F3, ..., FN), bzw. des Netzwerkknotens (NK1, NK2, NK3, ..., NKm), ein zum Feldgerät (F1, F2, F3, ..., FN), bzw. zum Netzwerkknoten (NK1, NK2, NK3, ..., NKm) korrespondierender Gerätetreiber (GT) in der ersten Rahmenapplikation (FR1) geladen wird.

6. Verfahren nach zumindest einem der vorherigen Ansprüche, wobei die bestimmten Netzwerkknoten (NK1, NK2, NK3, ..., NKm) und Feldgeräte (F1, F2, F3, ..., FN) gemäß den übermittelten Strukturdaten in der ersten Rahmenapplikation (FR1) visualisiert werden.

7. Verfahren nach Anspruch 6, wobei die bestimmten Netzwerkknoten (NK1, NK2, NK3, ..., NKm) und Feldgeräte (F1, F2, F3, ..., FN) in einer Netzwerktopologie visualisiert werden, welche Netzwerktopologie eine Sortierung und Strukturierung der Netzwerkknoten (NK1, NK2, NK3, ..., NKm) und Feldgeräte (F1, F2, F3, ..., FN) entsprechend deren Netzwerkadressen vorsieht.

8. Verfahren nach Anspruch 6, wobei die bestimmten Netzwerkknoten (NK1, NK2, NK3, ..., NKm) und Feldgeräte (F1, F2, F3, ..., FN) in einer Anlagentopologie visualisiert werden, wobei die Anlagentopologie eine Sortierung und Strukturierung der Netzwerkknoten (NK1, NK2, NK3, ..., NKm) und Feldgeräte (F1, F2, F3, ..., FN) entsprechend der jeweiligen Anlagenteile, in welchem die Netzwerkknoten (NK1, NK2, NK3, ..., NKm) und Feldgeräte (F1, F2, F3, ..., FN) eingesetzt sind, vorsieht.

9. Verfahren nach zumindest einem der Ansprüche 6 bis 8, wobei durch Auswählen eines Netzwerkknotens (NK1, NK2, NK3, ..., NKm) in der Visualisierung (VS) die Strukturdaten von in mit dem Netzwerkknoten (NK1, NK2, NK3, ..., NKm) verbundenen weiteren Netzwerkebenen (NE1, NE2) des ersten Kommunikationsnetzwerks (KN1) neu erstellt, übermittelt und visualisiert werden.

10. Verfahren nach einem der Ansprüche 4 bis 9, wobei die Bedienung des Feldgeräts (F1, F2, F3, ..., FN), bzw. des Netzwerkknotens (NK1, NK2, NK3, ..., NKm), durch dessen Auswahl in der Visualisierung (VS) in der ersten Rahmenapplikation (FR1) initiiert wird.

11. Verfahren nach zumindest einem der vorherigen Ansprüche, wobei die Strukturdaten in einem strukturierten Textformat, in einem XML-Datenformat, in einem SQL-Datenformat oder in einem JavaScript Object Notation-Datenformat an den Client-Rechner (CR) übermittelt werden.

12. Anordnung, umfassend einen Client-Rechner (CR), auf welchem eine erste Rahmenapplikation (FR1) und einen auf der ersten Rahmenapplikation (FR1) ablaufenden Kommunikationstreiber (KT) implementiert ist, und eine Feldbuszugriffseinheit (FE), auf weicher eine zweite Rahmenapplikation (FR2) implementiert ist, wobei die Anordnung zur Durchführung des Verfahrens nach zumindest einem der Ansprüche 1 bis 11 eingerichtet ist.

## Claims

1. Procedure for monitoring a system (A) used in automation engineering, wherein said system has a fieldbus access unit (FE), particularly a computing unit, a gateway or an edge device, wherein said fieldbus access unit (FE) has a communication connection to at least a first wired or wireless communication network (KN1), wherein the first communication network (KN1) has multiple field devices (F1, F2, F3, ..., FN) and network nodes (NK1, NK2, NK3, ..., NKm),
wherein a communication driver (KT) - which runs in a first framework application (FR1), wherein said first framework application (FR1) is implemented on a client computer (CR) connected directly or indirectly to the fieldbus access unit (FE) via at least a second communication network (KN2) - retrieves structure data of network nodes (NK1, NK2, NK3, ..., NKm) and field devices (F1, F2, F3, ..., FN) present in at least one network level (NE1, NE2) of the first communication network (KN1),
wherein the retrieval of the structure data is transmitted to the fieldbus access unit (FE) and the latter unit creates said structure data and transmits the data to the client computer (CR); and
wherein, within the framework of the data retrieval, the structure data is created by the fieldbus access unit (FE) in that the fieldbus access unit (FE) scans the address space of the network level (NE1, NE2) and determines the network nodes (NK1, NK2, NK3, ..., NKm) and field devices (F1, F2, F3, ..., FN) present in the address space, wherein the structure data concerns the infrastructure of the first communication network and contains network addresses and identification data of the determined field devices (F1, F2, F3, ..., FN) and network nodes (NK1, NK2, NK3, ..., NKm), as well as the network level (NE1, NE2) in which the determined field devices (F1, F2, F3, ..., FN) and network nodes (NK1, NK2, NK3, ..., NKm) are determined.

2. Procedure as claimed in Claim 1, wherein, when the first framework application (FR1) is created, the fieldbus access unit (FE) automatically creates and transmits the structure data of the network level (NE1) of the first communication network (KN1) that is directly connected to the fieldbus access unit (FE).

3. Procedure as claimed in at least one of the Claims 1 or 2, wherein, in addition to the structure data of the network level (NE1, NE2), the fieldbus access unit (FE) creates the structure data of the entire first communication network (KN1) and transmits this data to the client computer (CR).

4. Procedure as claimed in Claim 1, wherein one of the determined network nodes (NK1, NK2, NK3, ..., NKm) and field devices (F1, F2, F3, ..., FN) is operated using the first framework application (FR1) in that, using the identification data and the network address, a communication channel (KK) is established between the client computer (CR) and the field device (F1, F2, F3, ..., FN) or the network node (NK1, NK2, NK3, ..., NKm) via the fieldbus access unit (FE).

5. Procedure as claimed in Claim 4, wherein, to operate the field device (F1, F2, F3, ..., FN) or the network node (NK1, NK2, NK3, ..., NKm), a device driver (GT) corresponding to the field device (F1, F2, F3, ..., FN) or the network node (NK1, NK2, NK3, ..., NKm) is loaded in the first framework application (FR1).

6. Procedure as claimed in at least one of the previous claims, wherein the determined network nodes (NK1, NK2, NK3, ..., NKm) and field devices (F1, F2, F3, ..., FN) are visualized in the first framework application (FR1) in accordance with the transmitted structure data.

7. Procedure as claimed in Claim 6, wherein the determined network nodes (NK1, NK2, NK3, ..., NKm) and field devices (F1, F2, F3, ..., FN) are visualized in a network topology, wherein said network topology provides for the sorting and structuring of the network nodes (NK1, NK2, NK3, ..., NKm) and field devices (F1, F2, F3, ..., FN) according to their network addresses.

8. Procedure as claimed in Claim 6, wherein the determined network nodes (NK1, NK2, NK3, ..., NKm) and field devices (F1, F2, F3, ..., FN) are visualized in a system topology, wherein the system topology provides for the sorting and structuring of the network nodes (NK1, NK2, NK3, ..., FN) and field devices (F1, F2, F3, ..., FN) in accordance with the various system parts in which the network nodes (NK1, NK2, NK3, ..., NKm) and field devices (F1, F2, F3, ..., FN) are used.

9. Procedure as claimed in at least one of the Claims 6 to 8, wherein, by selecting a network node (NK1, NK2, NK3, ..., NKm) in the visualization (VS), the structure data of other network levels (NE1, NE2) of the first communication network (KN1) connected to the network node (NK1, NK2, NK3, ..., NKm) are recreated, transmitted and visualized.

10. Procedure as claimed in one of the Claims 4 to 9, wherein the operation of the field device (F1, F2, F3, ..., FN) or the network node (NK1, NK2, NK3, ..., NKm) is initiated by selecting it in the visualization (VS) in the first framework application (FR1).

11. Procedure as claimed in at least one of the previous claims, wherein the structure data is transmitted to the client computer (CR) in a structured text format, in an XML data format, in an SQL data format or in a JavaScript Object Notation data format.

12. Arrangement comprising a client computer (CR) on which a first framework application (FR1) and a communication driver (KT) running on the first framework application (FR1) is implemented, and a fieldbus access unit (FE) on which a second framework application (FR2) is implemented, wherein the arrangement is set up to perform the procedure as claimed in at least one of the Claims 1 to 11.

## Revendications

1. Procédé destiné à la surveillance d'une installation (A) de la technique d'automatisation, laquelle installation comporte une unité d'accès au bus de terrain (FE), notamment une unité de calcul, une passerelle ou un Edge Device, laquelle unité d'accès au bus de terrain (FE) est en liaison de communication avec au moins un premier réseau de communication (KN1) conçu avec ou sans fil, le premier réseau de communication (KN1) présentant une pluralité d'appareils de terrain (F1, F2, F3, ..., FN) et de nœuds de réseau (NK1, NK2, NK3, ..., NKm), un driver de communication (KT) - lequel est exécuté dans une première application cadre (FR1), laquelle première application cadre (FR1) est implémentée sur un ordinateur client (CR) relié directement ou indirectement à l'unité d'accès au bus de terrain (FE) via au moins un deuxième réseau de communication (KN2) - interrogeant des données de structure provenant des nœuds de réseau (NK1, NK2, NK3, ..., NKm) et des appareils de terrain (F1, F2, F3, ..., FN) présents dans au moins une couche réseau (NE1, NE2) du premier réseau de communication (KN1),
l'interrogation des données de structure étant transmise à l'unité d'accès au bus de terrain (FE) et celle-ci créant lesdites données de structure et les transmettant à l'ordinateur client (CR) ; et
les données de structure étant créées dans le cadre de la demande venant de l'unité d'accès au bus de terrain (FE) en ce que l'unité d'accès au bus de terrain (FE) balaye l'espace d'adressage de la couche réseau (NE1, NE2) et déterminant les nœuds de réseau (NK1, NK2, NK3, ..., NKm) et les appareils de terrain (F1, F2, F3, ..., FN), les données structurelles concernant l'infrastructure du premier réseau de communication et contenant des adresses de réseau et des données d'identification des appareils de terrain (F1, F2, F3, ..., FN) et des nœuds de réseau (NK1, NK2, NK3, ..., NKm) respectivement déterminés, ainsi que la couche réseau (NE1, NE2) dans laquelle se trouvent les appareils de terrain (F1, F2, F3, ..., FN) et les nœuds de réseau (NK1, NK2, NK3, ..., NKm) déterminés.

2. Procédé selon la revendication 1, pour lequel l'unité d'accès au bus de terrain (FE) crée et transmet automatiquement, lors du démarrage de la première application cadre (FR1), les données de structure de la couche réseau (NE1) du premier réseau de communication (KN1) qui est directement relié à l'unité d'accès au bus de terrain (FE).

3. Procédé selon au moins l'une des revendications 1 ou 2, pour lequel l'unité d'accès au bus de terrain (FE) crée et transmet à l'ordinateur client (CR), en plus des données structurelles de la couche réseau (NE1, NE2), les données structurelles de l'ensemble du premier réseau de communication (KN1).

4. Procédé selon la revendication 1, pour lequel l'un des nœuds de réseau (NK1, NK2, NK3, ..., NKm) et l'un des appareils de terrain (F1, F2, F3, ..., FN) déterminés sont desservis au moyen de la première application cadre (FR1), en établissant, à l'aide de ses données d'identification et de son adresse de réseau, un canal de communication (KK) entre l'ordinateur client (CR) et l'appareil de terrain (F1, F2, F3, ..., FN) ou le nœud de réseau (NK1, NK2, NK3, ..., NKm), via l'unité d'accès au bus de terrain (FE).

5. Procédé selon la revendication 4, pour lequel, pour la commande de l'appareil de terrain (F1, F2, F3, ..., FN) ou du nœud de réseau (NK1, NK2, NK3, ..., NKm), un driver d'appareil (GT) correspondant à l'appareil de terrain (F1, F2, F3, ..., FN) ou au nœud de réseau (NK1, NK2, NK3, ..., NKm) est chargé dans la première application cadre (FR1).

6. Procédé selon au moins l'une des revendications précédentes, pour lequel les nœuds de réseau (NK1, NK2, NK3, ..., NKm) et les appareils de terrain (F1, F2, F3, ..., FN) déterminés sont visualisés dans la première application cadre (FR1) conformément aux données de structure transmises.

7. Procédé selon la revendication 6, pour lequel les nœuds de réseau (NK1, NK2, NK3, ..., NKm) et les appareils de terrain (F1, F2, F3, ..., FN) déterminés sont visualisés dans une topologie de réseau, laquelle topologie de réseau prévoit un tri et une structuration des nœuds de réseau (NK1, NK2, NK3, ..., NKm) et des appareils de terrain (F1, F2, F3, ..., FN) selon leurs adresses de réseau.

8. Procédé selon la revendication 6, pour lequel les nœuds de réseau (NK1, NK2, NK3, ..., NKm) et les appareils de terrain (F1, F2, F3, ..., FN) déterminés sont visualisés dans une topologie d'installation, la topologie d'installation permettant de trier et de structurer les nœuds de réseau (NK1, NK2, NK3, ..., FN) en fonction des différentes parties de l'installation, dans lesquelles les nœuds de réseau (NK1, NK2, NK3, ..., NKm) et les appareils de terrain (F1, F2, F3, ..., FN) sont utilisés.

9. Procédé selon au moins l'une des revendications 6 à 8, pour lequel, en sélectionnant un nœud de réseau (NK1, NK2, NK3, ..., NKm) dans la visualisation (VS), les données de structure d'autres niveaux de réseau (NE1, NE2) du premier réseau de communication (KN1) reliés au nœud de réseau (NK1, NK2, NK3, ..., NKm) sont recréées, transmises et visualisées.

10. Procédé selon l'une des revendications 4 à 9, pour lequel la commande de l'appareil de terrain (F1, F2, F3, ..., FN) ou du nœud de réseau (NK1, NK2, NK3, ..., NKm) est initiée par sa sélection dans la visualisation (VS) dans la première application cadre (FR1).

11. Procédé selon au moins l'une des revendications précédentes, pour lequel les données de structure sont transmises à l'ordinateur client (CR) dans un format de texte structuré, dans un format de données XML, dans un format de données SQL ou dans un format de données JavaScript Object Notation.

12. Dispositif comprenant un ordinateur client (CR), sur lequel sont implémentés une première application cadre (FR1) et un driver de communication (KT) s'exécutant sur la première application cadre (FR1), ainsi qu'une unité d'accès au bus de terrain (FE), sur laquelle est implémentée une deuxième application cadre (FR2), le dispositif étant conçu pour la réalisation du procédé selon au moins l'une des revendications 1 à 11.
